# EUROPEAN PATENT APPLICATION

(11) **EP 1 653 091 A1**
(43) Date of publication of application: **03.05.2006**
(21) Application number: 05109902.6
(22) Date of filing: 24.10.2005
(51) Int. Cl.: F16B 19/10, F16B 39/34, F16B 37/06

(54) **Self-locking threaded tubular rivet**

(30) Priority: 26.10.2004 IT TO20040740
(71) Applicant: Specialinterest S.r.l., 10142 Torino (IT)
(72) Inventor: Lisso, Dino, 30030 Martellago (Venezia) (IT)
(74) Representative: Serra, Francesco

(57) **Abstract**

There is described a self-locking tubular rivet (2), comprising a support head (4), an expansion and deformation chamber (6), a threaded portion (8) and a fitting bushing (10) for locking and self-locking, inserted in the end region of the threaded portion (8).

## Description

The present invention relates to a self-locking threaded tubular rivet, and more precisely relates to a threaded tubular rivet, which can anchor itself in perforated rolled metal sections and have a locking function with subsequent connection by means of a screw or threaded member.

Further features and advantages of the present invention will become clear from the following detailed description which is given purely by way of non-limiting example with reference to the appended drawings in which:
- Figs. 1 - 6 illustrate the steps for assembling and using the rivet in accordance with the invention;

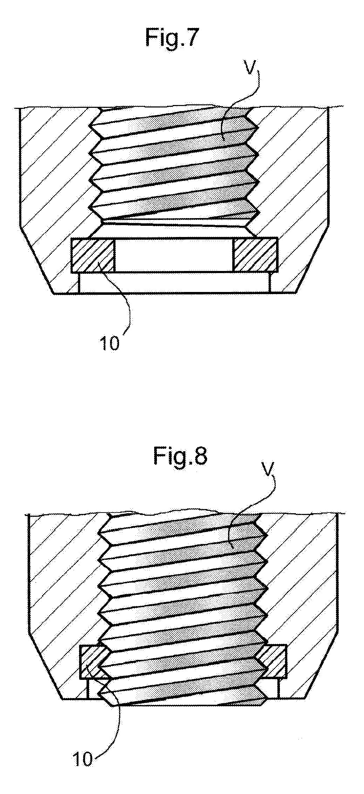

- Fig. 7 is an enlarged detail of Fig. 5; and
- Fig. 8 is an enlarged detail of Fig. 6.

With reference to the drawings, in which identical or equivalent details are indicated with the same reference numerals, the rivet to which the present invention relates and which is illustrated so as to have a hexagonal cross-section is generally designated 2.

The rivet 2 comprises a support head 4, an expansion and deformation chamber 6 and a threaded portion 8.

A fitting bushing 10 is inserted in the end region of the threaded portion 8 and has a locking and/or self-locking function.

The bushing 10, which is assembled inside an accommodating seat which is contiguous with the threading, brings about the locking function since the dimensioning, as well as the absence of threading, apply, with respect to a connection screw inserted in the rivet, a force owing to the reaction of the material with the screw.

The method for assembling/fixing a component to another by means of the rivet in accordance with the invention is as follows.

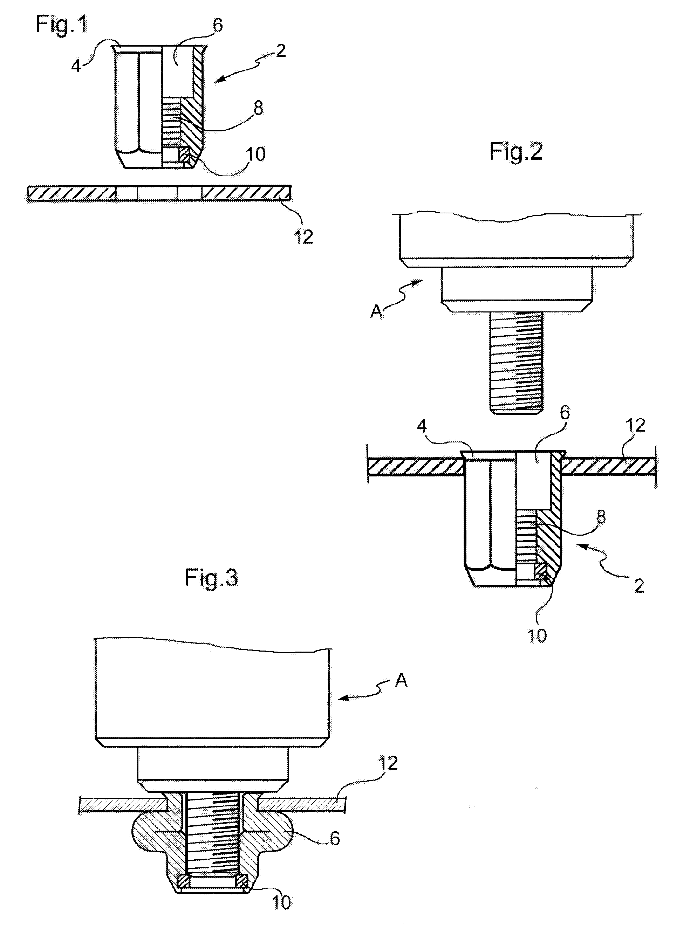

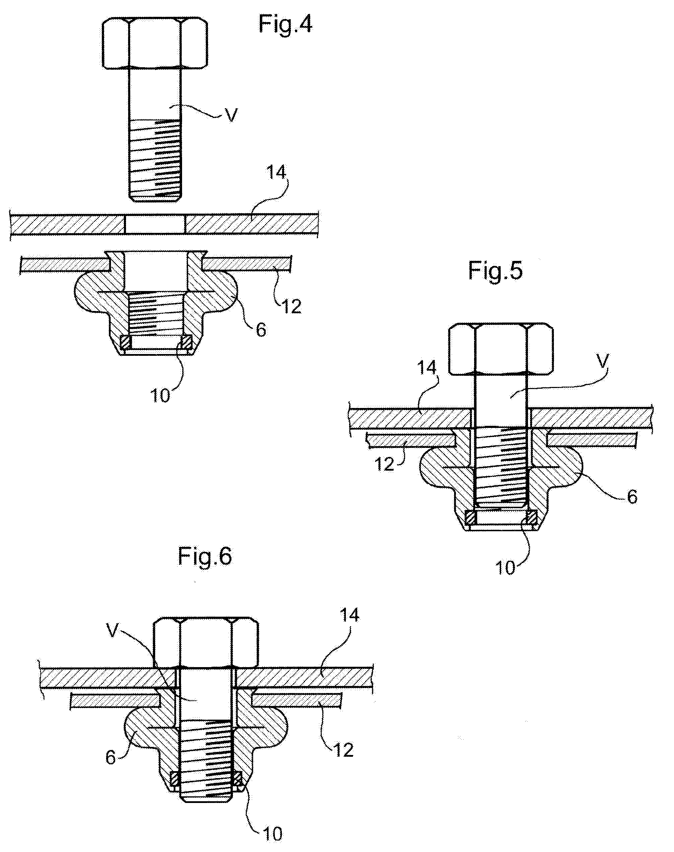

With reference to Figs. 1 to 6 in sequence, there is provided on a first component 12 the seat corresponding to the rivet 2 used (in the case of the examples of Figs. 4 to 6, the seat is hexagonal since the rivet has a hexagonal cross-section).

The self-locking threaded tubular rivet 2 is inserted by means of the shank portion in the seat which has previously been prepared.

The rivet is set by means of a piece of equipment A which can be manual, electrical, pneumatic, etc., bringing about the deformation of the deformation chamber 6 with consequent powerful anchoring in the receiving material, in this case the component 12; without interacting with the fitted locking bushing 10.

There is provided a material 14 which must be secured to the material 12; the material 14 has a through-hole which is positioned in alignment with the threaded hole of the rivet 2 according to the invention; there is introduced a screw V or threaded member which is connected to the rivet 2 over the entire length thereof, including the self-locking bushing 10, which retains the screw in such a manner as to prevent any unscrewing actions caused, for example, by simple vibrations.

The above makes clear the advantages of a rivet according to the invention; there is produced a more secure assembly between the components involved because the screw or threaded member used is not susceptible to the risks of becoming unscrewed owing to vibrations of the components and ensures tightening torques which are predetermined in accordance with the bushing used as the means to prevent unscrewing.

The play values between the screw and the threaded seat of the tubular rivet are eliminated, thereby reducing vibrations and noise.

A number of screwing/unscrewing operations can be carried out without losing the self-locking characteristics of the product, and it can be fitted to "blind" parts, such as boxes or tubes, and can advantageously be used as a substitute for the normal screw/self-locking nut connection, in particular in assemblies where it is not possible to gain access from both sides.

Naturally, the principle of the invention remaining the same, the details may be varied widely with respect to those described and illustrated above, without thereby departing from the scope of protection of the invention itself.

## Claims

1. A self-locking tubular rivet, **characterized in that** it comprises a support head (4), an expansion and deformation chamber (6), a threaded portion (8) and a fitting bushing (10) for locking and self-locking, inserted in the end region of the threaded portion (8).

2. A self-locking tubular rivet according to claim 1, **characterized in that**, for use, the expansion and deformation chamber (6) is deformed by a manual, electrical or pneumatic piece of equipment.

3. A tubular rivet according to the preceding claims, **characterized in that** the rivet (2) is, in the region between the support head (4) and the bushing (10), at least partially of substantially polygonal, preferably hexagonal, cross-section.

4. A tubular rivet according to claims 1 and 2, **characterized in that** the rivet (2) has, in the region between the support head (4) and the bushing (10), a substantially circular or elliptical cross-section.
All substantially as described and illustrated and for the purposes specified.
